# EUROPÄISCHE PATENTSCHRIFT

(11) **EP 2 455 231 B1**
(45) Veröffentlichungstag und Bekanntmachung des Hinweises auf die Patenterteilung: **11.04.2018**
(21) Anmeldenummer: 11009270.7
(22) Anmeldetag: 22.11.2011
(51) Int. Cl.: B60B 29/00, B25B 27/02

(54) **Vorrichtung zum Abziehen einer auf einer Radnabe eines Kraftfahrzeugs sitzenden Felge**
Device for pulling a rim positioned on a wheel hub of a vehicle
Dispositif destiné à l'enlèvement d'une jante se trouvant sur un moyeu de roue d'un véhicule automobile

(30) Priorität: 22.11.2010 DE 102010052122
(43) Veröffentlichungstag der Anmeldung: 23.05.2012
(73) Patentinhaber: TRACTO-TECHNIK GmbH & Co. KG, 57368 Lennestadt (DE)
(72) Erfinder: Püttmann, Franz-Josef, 57368 Lennestadt (DE)
(74) Vertreter: Tilmann, Max Wilhelm

(56) Entgegenhaltungen:
- CN-Y- 2 825 220
- DE-C1- 3 530 726
- DE-U1-202006 013 059
- US-A- 1 654 009
- US-A- 2 005 534
- US-A- 4 507 838
- US-A- 4 982 488

## Beschreibung

Die Erfindung betrifft eine Vorrichtung zum Abziehen einer auf einer Radnabe eines Kraftfahrzeugs sitzenden Felge.

Eine solche Vorrichtung ist beispielsweise aus der DE 103 48 487 A1 bekannt. Die darin offenbarte Vorrichtung umfasst Abstützmittel, die sich durch die Felge hindurch zentral an der Radnabe oder einem Achsstummel abstützen sowie mehrere Greifelemente, die am Außenumfang der Felge oder eines darauf sitzenden Reifens positioniert werden und jeweils einen Abschnitt aufweisen, der das Rad hintergreift. Mit Hilfe einer Betätigungseinrichtung können die Halteelemente relativ zu dem Abstützelement verfahren werden, wodurch die Felge oder das Rad von der Radnabe abgezogen wird. Die aus der DE 103 48 487 A1 bekannte Vorrichtung ist relativ groß und massiv, d.h. schwer ausgebildet, da über diese hohe Kräfte übertragen werden müssen. Sie eignet sich daher lediglich für den stationären Einsatz, beispielsweise in einer Werkstatt. Zudem können durch das Einleiten der Abziehkräfte im Bereich des Außenumfangs des Rads hohe Biegemomente entstehen, die die Felge verformen können.

Aus der DE 20 2006 013 059 U1 ist eine Vorrichtung zum Abziehen einer Felge von einer Radnabe eines Kraftfahrzeugs offenbart, die einen Gewindebolzen umfasst, der in die Durchgangsöffnung der Felge, die im Betrieb des Fahrzeugs zur Aufnahme der Radschraube dient, eingeschraubt wird, wobei zuvor ein Innengewinde in die Durchgangsöffnung geschnitten wurde. Der Gewindebolzen wird soweit eingeschraubt, bis das vordere Ende des Gewindebolzens an der Radnabe abstützt. Durch ein Drehen des Gewindebolzens können Druckkräfte erzeugt werden, die die Felge von der Radnabe lösen. Ein Vorteil der aus der DE 20 2006 013 059 U1 bekannten Vorrichtung ist, dass sie sehr klein und leicht ist und somit auch ohne weiteres im Fahrzeug mitgeführt werden kann. Zudem ist ihre Herstellung mit sehr geringen Kosten verbunden. Ein Nachteil dieser Vorrichtung liegt jedoch darin, dass für deren Anwendung zunächst ein Gewinde in die Durchgangsöffnung der Felge geschnitten werden muss. Dies ist zum einen aufwendig und zum anderen mit einer Beschädigung der Felge verbunden.

DE 35 30 726 C1 offenbart eine Vorrichtung zum Herausdrücken von Radflanschnaben oder Flanschkeilnaben von Kraftfahrzeugen oder dergleichen aus einem Wellenlager. Es wird ein Druckstück mittels einer Druckspindel mit Druck beaufschlagt, so dass die Radflanschnabe aus dem Wälzlager herausgedrückt werden kann. Zum Abstützen der Druckspindel sind Spreizsektoren und ein Spreizkegel mit einer hohlen Gewindespindel vorgesehen. Die beiden Spreizsektoren weisen radial nach außen vorspringende, rippenartige Verankerungsvorsprünge auf, die formschlüssig in eine Ringnut eines Lagerzylinders einsetzbar sind. Zum Verspannen der Verankerungsvorsprünge in der Ringnut wird der Spreizkegel mit Hilfe der Gewindespindel relativ zu den beiden Spreizsektoren bewegt, so dass sich eine axiale Verankerung der beiden Spreizsektoren in der Ringnut ergibt.

US 4,507,838 A offenbart ein Werkzeug zum Entfernen und Ersetzen eines Radlagers.

US 2,005,534 A offenbart einen Radabzieher.

US 1,654,009 A offenbart eine Vorrichtung zum Abziehen eines Rades von einer Achse. Eine Radnabe kann von einem ringförmigen Adapter umgriffen werden, wobei konzentrisch zum ringförmigen Adapter eine Bohrung in einem Körper vorgesehen ist, durch die eine Abzugsschraube drehbar gelagert ist, um gegen eine Achse des Rades bewegt zu werden. Dabei drückt die Schrauben mit ihrem Ende auf die Achse und kann die Radnabe von der Achse ziehen.

Der Erfindung lag die Aufgabe zugrunde, eine verbesserte Vorrichtung zum Abziehen einer Felge von einer Radnabe eines Kraftfahrzeugs anzugeben.

Diese Aufgabe wird durch den Gegenstand des unabhängigen Patentanspruchs gelöst. Vorteilhafte Ausführungsformen sind Gegenstand der abhängigen Patentansprüche und ergeben sich aus der nachfolgenden Beschreibung der Erfindung.

Der Kern der Erfindung liegt darin, bei einer Vorrichtung, wie sie prinzipiell aus der DE 20 2006 013 059 U1 bekannt ist, die (zur Aufnahme der Radschrauben) ohnehin in der Radnabe vorhandenen Innengewinde zu nutzen, um durch ein Drehen des Gewindebolzens die für ein Lösen der Felge erforderlichen Druckkräfte (in längsaxialer Richtung des Gewindebolzens) zu erzeugen. Zur Übertragung dieser Druckkräfte auf die Felge ist erfindungsgemäß dann noch ein Abstützelement vorgesehen.

Eine erfindungsgemäße Vorrichtung zum Abziehen einer auf einer Radnabe eines Kraftfahrzeugs sitzenden Felge weist somit einen Gewindebolzen, der mit einem an ein Innengewinde der Nabe angepassten Gewindeabschnitt versehen ist, sowie ein Abstützelement zum (temporären) Abstützen von Druckkräften an der Felge auf.

Durch die Nutzung eines ohnehin in der Nabe vorhandenen Innengewindes ist es nicht erforderlich, zunächst ein entsprechendes Gewinde in die Felge zu schneiden, wie dies aus der DE 20 2006 013 059 U1 bekannt ist. Dadurch wird der Aufwand zum Abziehen der Felge erheblich verringert und eine Beschädigung der Felge vermieden.

Als "Radnabe" wird erfindungsgemäß der Teil einer Achse eines Kraftfahrzeugs verstanden, mit dem eine Felge direkt durch Verschraubung verbunden werden kann. Die Radnabe kann dabei nicht nur die Nabe an sich sondern beispielsweise auch eine damit verbundene Trägerscheibe (insbesondere bei Achsen mit Scheibenbremsen) oder eine Bremstrommel (bei Achsen mit Trommelbremsen) umfassen.

Als "Felge" wird erfindungsgemäß der Teil des Rads eines Kraftfahrzeugs verstanden, der durch eine Verschraubung mit der Radnabe verbindbar ist. Der Begriff "Felge" umfasst hierbei somit auch die Radschüssel bzw. Radscheibe.

Bei der erfindungsgemäßen Vorrichtung ist das Abstützelement in Form eines Spreizelement ausgeführt, das zwischen einem ersten Durchmesser, der geringer als der Durchmesser einer Durchgangsöffnung in der Felge ist, und einem zweiten Durchmesser, der den Durchmesser der Durchgangsöffnung übersteigt, verstellbar ist. Das Spreizelement kann dadurch, nachdem es in die Durchgangsöffnung in der Felge eingesetzt wurde, aufgespreizt werden, so dass es die Felge innerhalb der Durchgangsöffnung kraftschlüssig fixiert. Sofern zwischen der Felge und der Radnabe im Bereich der Durchgangsöffnung der Felge bzw. des Innengewinde der Radnabe ein Zwischenraum vorhanden sein sollte, kann das Spreizelement nach dem Aufspreizen auch (teilweise) hinter die Durchgangsöffnung greifen, um die Druckkräfte formschlüssig abzustützen.

In einer bevorzugten Ausführungsform der erfindungsgemäßen Vorrichtung kann das Verstellen des Durchmessers des Spreizelements dadurch erreicht werden, dass dieses einen konischen Innenabschnitt aufweist und der Gewindebolzen einen korrespondierenden konischen Außenabschnitt und das Spreizelement mittels eines Verschiebeelements relativ zu dem Gewindebolzen verschoben wird, wobei die beiden konischen Abschnitte aufeinander abgleiten. Durch eine solche Ausgestaltung des Spreizelements können durch eine relativ kurze Axialverschiebung des Spreizelements auf dem Gewindebolzen sehr hohe radiale Druckkräfte ausgeübt werden. Zudem ist ein derart wirkendes Spreizelement einfach herstellbar und verschleißunempfindlich.

Vorzugsweise ist das Verschiebeelement über ein Gewinde mit dem Gewindebolzen verbunden, so dass durch eine Drehung des Verschiebelements die Axialverschiebung des Spreizelements auf dem Gewindebolzen bewirkt werden kann. In Abhängigkeit von der Steigung des Gewindes können dadurch sowohl sehr hohe radiale Druckkräfte ausgeübt als auch eine Selbsthemmung erzeugt werden, die eine zusätzliche Sicherung des aufgespreizten Spreizelements entbehrlich machen kann.

Um das erforderliche Drehmoment auf das Verschiebeelement auszuüben, kann die Außenkontur des Verschiebelements so ausgebildet sein, dass diese für einen Eingriff eines handelsüblichen Werkzeugs vorgesehen ist. Insbesondere kann das Verschiebeelement eine Sechskant-Außenkontur aufweisen, die den Einsatz u.a. eines handelsüblichen Maul- oder Ringschlüssels ermöglicht.

In einer weiterhin bevorzugten Ausführungsform kann das Spreizelement zur Ausbildung von mindestens zwei Teilelementen in axialer Richtung geteilt sein. Dadurch wird ermöglicht, die Teilelemente des Spreizelements selbst aus (bei den vorherrschenden Kräften) wenig dehnbarem Material, insbesondere Metall und besonders bevorzugt (Werkzeug-)Stahl, auszubilden und die Durchmesservergrößerung dadurch zu bewirken, dass die Teilelemente in radialer Richtung auseinander geschoben werden.

Um ein vollständiges Lösen der Teilelemente voneinander zu vermeiden und zudem ein selbstständiges Zurückstellen nach der Entlastung des Spreizelements zu erreichen, können die Teilelemente vorzugsweise durch elastische Mittel zusammengehalten werden. Hierbei kann es sich insbesondere um einen handelsüblichen O-Ring handeln, der die Teilelemente des Spreizelements umgibt und gegeneinander verspannt.

Um das erforderliche Drehmoment zum Lösen der Felge von der Nabe aufzubringen, kann der Gewindebolzen vorzugsweise mit einem Kopf versehen sein, der für ein einen Eingriff eines handelsüblichen Werkzeugs ausgebildet ist. Insbesondere kann es sich hierbei um einen Sechskant-Kopf handeln, dessen Abmessungen vorzugsweise identisch zu den Abmessungen eines Sechskant-Kopfs der Radschrauben ist, mit denen die Felge in Betrieb mit der Radnabe verbunden ist. Dadurch kann der im Kraftfahrzeug regelmäßig ohnehin mitgeführte Radschlüssel zum Einsatz kommen, um den Gewindebolzen der erfindungsgemäßen Vorrichtung zu drehen.

Die Erfindung betrifft zudem ein System aus einer erfindungsgemäßen Vorrichtung, einer Radnabe mit einem Innengewinde sowie einer Felge mit mindestens einer in Überdeckung mit dem Innengewinde bringbaren Durchgangsöffnung.

Die Erfindung wird nachfolgend anhand eines in den Zeichnungen dargestellten Ausführungsbeispiels näher erläutert.

### In den Zeichnungen zeigt:

- Fig. 1:: eine erfindungsgemäße Vorrichtung; und
- Fig. 2 bis 4:: Einzelteile der Vorrichtung gemäß Fig. 1.

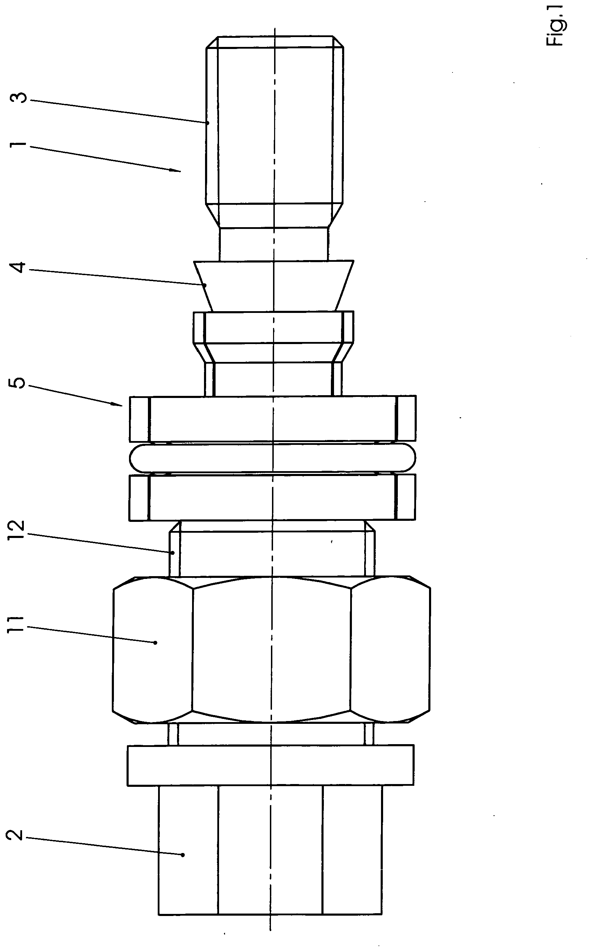

Die Fig. 1 bis 4 zeigen eine Ausführungsform einer erfindungsgemäßen Vorrichtung zum Abziehen einer Felge von einer Radnabe.

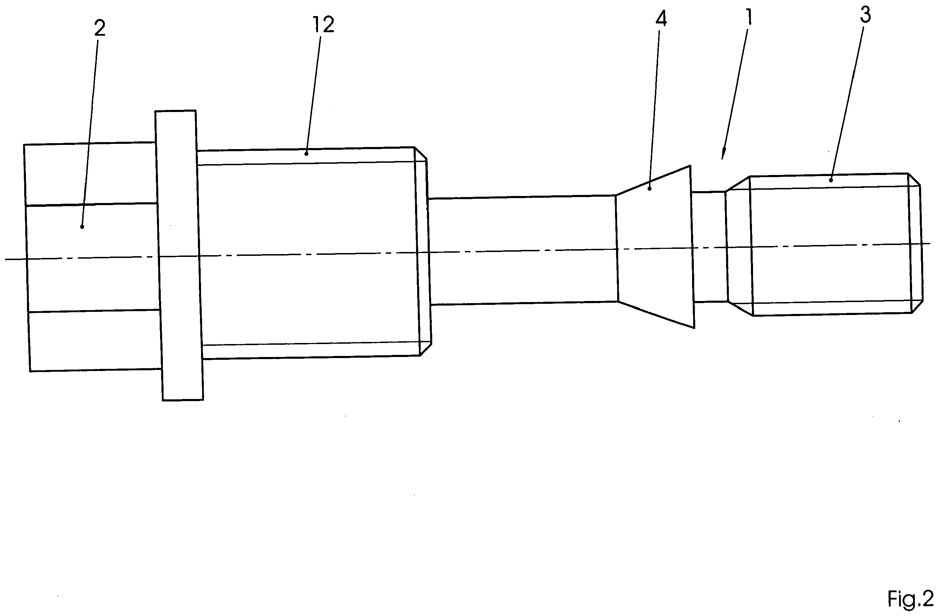

Die Vorrichtung umfasst einen Gewindebolzen 1 (vgl. Fig. 2), der mit einem Sechskant-Kopf 2 versehen ist, an dem ein handelsübliches Werkzeug (Maulschlüssel, Ringschlüssel, Radschlüssel, etc.) angreifen kann, um ein Drehmoment auf den Gewindebolzen 1 auszuüben. An dem dem Sechskant-Kopf 2 gegenüber liegenden Ende ist der Gewindebolzen 1 mit einem ersten Gewindeabschnitt 3 versehen, dessen Außengewinde zu einem Innengewinde in der Radnabe (nicht dargestellt) korrespondiert. Bei diesem Innengewinde der Radnabe handelt es sich um eines der Innengewinde, das eine der Radschrauben aufnimmt, mit denen die Felge im Betrieb des Kraftfahrzeugs an der Radnabe befestigt ist.

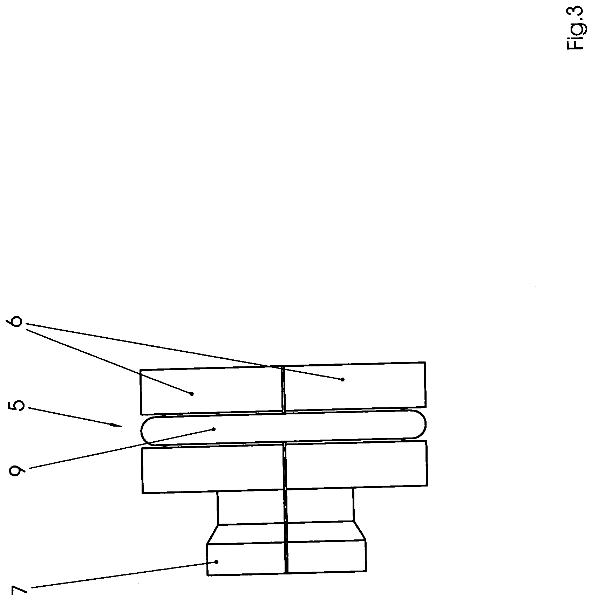

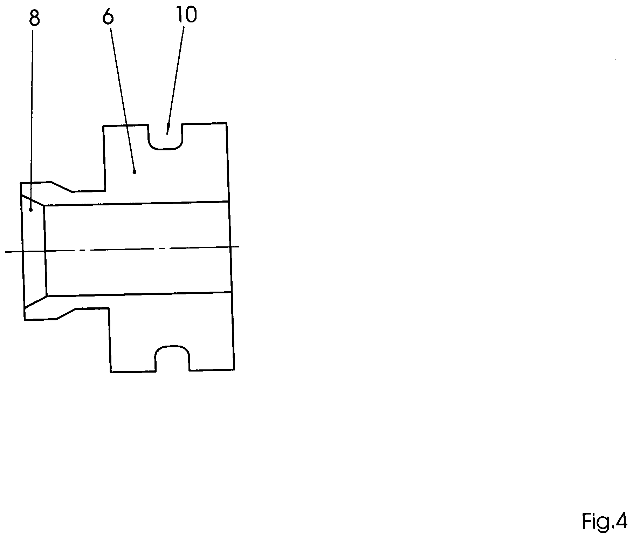

Dem ersten Gewindeabschnitt 3 benachbart ist ein konischer Abschnitt 4 vorgesehen, der mit einem Spreizelement 5 (vgl. Fig. 3) zusammenwirkt. Das Spreizelement 5 besteht aus drei identischen Teilelementen 6 (vgl. Fig. 4), die zusammengesetzt ein ringförmiges Bauteil bilden. Dieses ringförmige Bauteil ist beweglich auf einem an den konischen Abschnitt angrenzenden zylindrischen Abschnitt des Gewindebolzens gelagert. Das von den drei Teilelementen 6 gebildete ringförmige Bauteil weist ein Fortsatz 7 auf, dessen Innenseite konisch ausgebildet ist (vgl. Fig. 4). Dieser konische Innenabschnitt 8 wirkt mit dem konischen Abschnitt 4 des Gewindebolzens 1 zusammen, so dass durch ein Verschieben des Spreizelements 5 in Richtung des ersten Gewindeabschnitts 3 die drei Teilelemente 6 des Spreizelements 5 radial auseinander gedrückt werden, wodurch sich (zumindest teilweise) der Durchmesser des Spreizelements 5 vergrößert.

Um die drei Teilelemente 6 auf dem Gewindebolzen zusammenzuhalten, weist das Spreizelement 5 weiterhin einen handelsüblichen O-Ring 9 aus einem elastischen Werkstoff (insbesondere Gummi) auf, der in einer Nut 10, in der Außenseite des Spreizelements 5 angeordnet ist. Die Größe des O-Rings 9 ist so bemessen, dass dieses die drei Teilelemente 6 unter geringer Vorspannung gegeneinander drückt. Dadurch wird neben dem Zusammenhalt der Teilelemente erreicht, dass sich das radial aufgespreizte Spreizelement nach dessen Entlastung wieder selbstständig zusammenzieht. Die erfindungsgemäße Vorrichtung kann somit ohne Probleme wieder aus der Durchgangsöffnung der Felge entnommen werden.

Die die Aufspreizung des Spreizelements 5 bewirkende Relativverschiebung des Spreizelements 5 zu dem Gewindebolzen 1 wird über eine Sechskant-Mutter 11 erreicht, deren Innengewinde mit einem Außengewinde eines zweiten Gewindeabschnitts 12 des Gewindebolzens 1 zusammenwirkt. In der Fig. 2 ist zu erkennen, dass das Außengewinde des zweiten Gewindeabschnitts 12 größer als der größte Durchmesser des konischen Abschnitts 4 sowie größer als der Außendurchmesser des ersten Gewindeabschnitts 3 ist, so dass die Sechskant-Mutter 11 für die Montage der erfindungsgemäßen Vorrichtung ohne Weiteres von der Seite des ersten Gewindeabschnitts 3 aus auf den Gewindebolzen 1 aufgeschoben werden kann.

## Patentansprüche

1. Vorrichtung zum Abziehen einer auf einer Radnabe eines Kraftfahrzeugs sitzenden Felge, wobei die Radnabe mit mindestens einem Innengewinde und die Felge mit mindestens einer in Überdeckung mit dem Innengewinde bringbaren Durchgangsöffnung versehen ist, **gekennzeichnet durch** einen Gewindebolzen (1) mit einem an das Innengewinde der Radnabe angepassten Gewindeabschnitt (3) und einem auf dem Gewindebolzen (1) gelagerten Abstützelement zum Abstützen von Druckkräften an der Felge, wobei das Abstützelement ein Spreizelement (5) umfasst, das zwischen einem ersten Durchmesser, der geringer als der Durchmesser der Durchgangsöffnung in der Felge ist, und einem zweiten Durchmesser, der den Durchmesser der Durchgangsöffnung übersteigt, verstellbar ist.

2. Vorrichtung gemäß Anspruch 1, **dadurch gekennzeichnet, dass** das Spreizelement (5) einen konischen Innenabschnitt (8) aufweist, der mittels eines Verschiebeelement auf einem konischen Abschnitt (4) des Gewindebolzens (1) verschiebbar ist.

3. Vorrichtung gemäß Anspruch 2, **dadurch gekennzeichnet, dass** das Verschiebeelement über ein Gewinde mit dem Gewindebolzen (1) verbunden ist.

4. Vorrichtung gemäß einem der Ansprüche 1 bis 3, **dadurch gekennzeichnet, dass** das Spreizelement (5) zur Ausbildung von mindestens zwei Teilelementen (6) in längsaxialer Richtung geteilt ist.

5. Vorrichtung gemäß Anspruch 4, **dadurch gekennzeichnet, dass** die Teilelemente durch elastische Mittel zusammengehalten werden.

6. Vorrichtung gemäß einem der vorhergehenden Ansprüche, **dadurch gekennzeichnet, dass** der Gewindebolzen (1) mit einem Kopf für einen Eingriff eines handelsüblichen Werkzeugs versehen ist.

7. Vorrichtung gemäß Anspruch 6, **gekennzeichnet durch** einen Sechskant-Kopf (2).

8. System aus einer Vorrichtung gemäß einem der vorhergehenden Ansprüche, einer Radnabe mit mindestens einem Innengewinde und einer Felge mit mindestens einer in Überdeckung mit dem Innengewinde bringbaren Durchgangsöffnung.

## Claims

1. Device for pulling off a rim fitted to a wheel hub of a motor vehicle, wherein the wheel hub is equipped with at least one internal thread and the rim with at least one through opening to be aligned with the internal thread, **characterised by** a threaded bolt (1) with a thread section (3) matched to suit the internal thread of the wheel hub, and a support element mounted on the threaded bolt (1) for supporting pressure forces on the rim, wherein the support element comprises an expansion element (5) that can be adjusted between a first diameter that is smaller than the diameter of the through opening in the rim, and a second diameter that exceeds the diameter of the through opening.

2. Device according to claim 1, **characterised in that** the expansion element (5) has a conical inner section (8) that can be displaced to a conical section (4) of the threaded bolt (1) by means of a displacement element.

3. Device according to claim 2, **characterised in that** the displacement element is connected with the threaded bolt (1) via a thread.

4. Device according to one of the claims 1 to 3, **characterised in that** the expansion element (5) is divided in a longitudinal axial direction for forming at least two part elements (6).

5. Device according to claim 4, **characterised in that** the part elements are held together by elastic means.

6. Device according to one of the preceding claims, **characterised in that** the threaded bolt (1) is equipped with a head for inserting a commercially available tool.

7. Device according to claim 6, **characterised by** a hexagonal head (2).

8. System of a device according to one of the preceding claims, a wheel hub with at least one internal thread and a rim with at least one through opening that can be aligned with the internal thread.

## Revendications

1. Dispositif destiné à retirer une jante disposée sur un moyeu de roue d'un véhicule, le moyeu de roue étant prévu avec au moins un filet intérieur et la jante avec au moins une ouverture de passage pouvant être mis en recouvrement avec le filet intérieur, **caractérisé en** un boulon fileté (1) avec une section filetée (3) adaptée au filet intérieur du moyeu de roue et avec un élément portant logé sur le boulon fileté (1) destiné au support de forces de compression au niveau de la jante, l'élément portant comprenant un élément d'écartement (5), qui est réglable entre un premier diamètre inférieur au diamètre de l'ouverture de passage dans la jante et un deuxième diamètre supérieur au diamètre de l'ouverture de passage.

2. Dispositif selon la revendication 1, **caractérisée en ce que** l'élément d'écartement (5) présente une partie interne (8) conique qui peut être déplacée sur une partie conique (4) du boulon fileté (1) à l'aide d'un élément coulissant.

3. Dispositif selon la revendication 2, **caractérisée en ce que** l'élément coulissant est raccordé au boulon fileté (1) par un filetage.

4. Dispositif selon l'une des revendications 1 à 3, **caractérisé en ce que** l'élément d'écartement (5) est divisé afin de former au moins deux éléments partiels (6) dans le sens axial longitudinal.

5. Dispositif selon la revendication 4, **caractérisée en ce que** les éléments partiels sont maintenus à l'aide de moyens élastiques.

6. Dispositif selon l'une des revendications précédentes, **caractérisé en ce que** le boulon fileté (1) est prévu avec une tête pour engager un outil courant.

7. Dispositif selon la revendication 6, **caractérisé en** une tête à six pans (2).

8. Système provenant d'un dispositif selon une des revendications précédentes, un moyeu de roue avec au moins un filet intérieur et une jante avec au moins une ouverture de passage pouvant être mis en recouvrement avec le filet intérieur.
